# EUROPEAN PATENT APPLICATION

(11) **EP 1 219 856 A1**
(43) Date of publication of application: **03.07.2002**
(21) Application number: 00128423.1
(22) Date of filing: 28.12.2000
(51) Int. Cl.: F16F 9/04

(54) **Shock absorbing device having air envelopes**

(71) Applicant: Huang, Daniel, Taichung Hsien (CN)
(72) Inventor: Huang, Daniel, Taichung Hsien (CN)
(74) Representative: Casalonga, Axel

(57) **Abstract**

A shock absorber has two members (10, 20) movable relative to each other, and one or more air envelopes (13, 14) disposed between the members (10, 20) for cushioning purposes. One of the members (10) is a housing (10) having a chamber (12) for slidably receiving a piston (21) and a tube (22) of the other member (20). The tube (22) is slidably engaged through a cover (11) of the housing (10). A pump includes a casing (31) having an opening (39) coupled to the housing (10) for pumping air into the housing (10) and for providing a pressurized air in the housing (10).

## Description

The invention relates to a shock absorber having one or more air envelopes.

Typical shock absorbers include one or more springs which may fatigue, hydraulic oils which have leaking problems, and rubber materials which be changed by temperatures.

The invention is to provide a shock absorber having one or more cushioning air envelopes.
FIG. 1 is a cross sectional view of a shock absorber;
FIGS. 2 and 3 are partial cross sectional views of the body of the shock absorber and the pump; and
FIG. 4 is a plane view of another shock absorber.

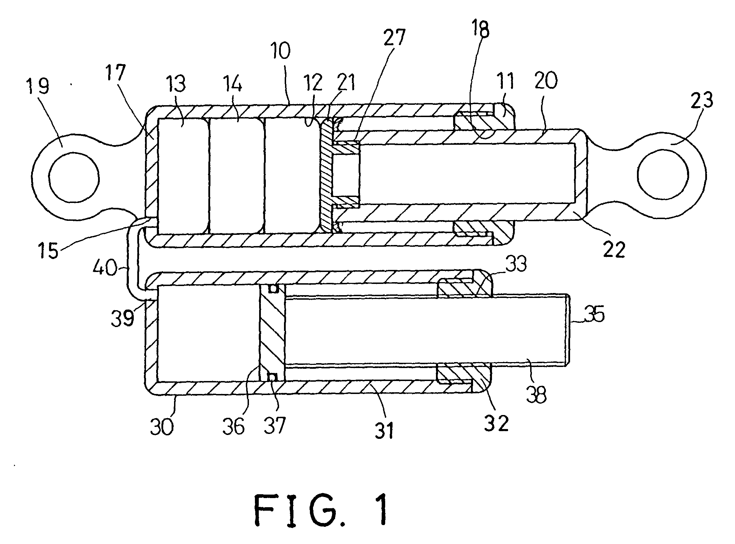

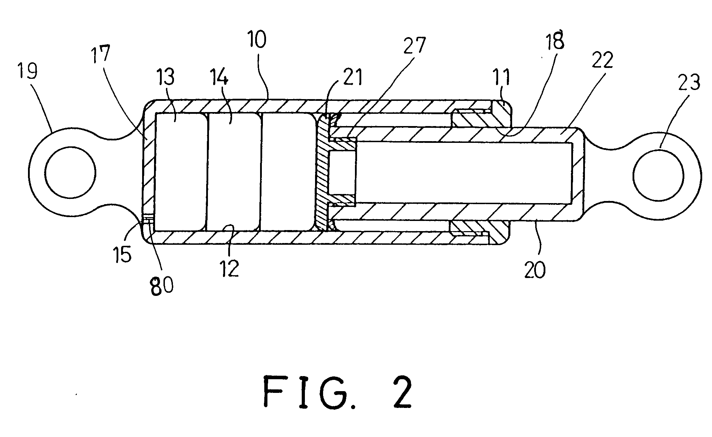

Referring to FIGS. 1-3, a shock absorber comprises two members 10, 20, slidably relative to each other, and one or more air envelopes 13, 14 disposed between the members 10, 20 for cushioning purposes. The first member 10 may be a (cylindrical) housing 10 having a chamber 12 for receiving the air envelopes 13, 14, and having an end wall 17, and having a cover 11 threaded to the other end. The cover 11 includes a bore 18. The members 10, 20 each has a ring 19, 23 for coupling to the other devices or mechanisms.

The second member 20 has a piston 21 secured to a tube 22 with such as a thread 27, and slidably engaged in the chamber 12 of the housing 10, for engaging with the air envelopes 13, 14. The air envelopes 13, 14 may be filled with air of different pressures for forming different cushioning effects. The end wall 17 of the housing 10 includes a port 15 having a valve 80 for selectively enclosing the chamber 12 of the housing 10.

A pump 30 includes a cylindrical casing 31 having an opening 39 for selectively coupling to the port 15 of the housing 10 with a hose 40 or the like. A cap 32 is threaded to the other end of the casing 31 and has an inner thread 33. A piston 36 is slidably received in the casing 31. A sealing ring 37 is engaged between the piston 36 and the casing 31 for making an air tight seal between the piston 36 and the casing 31. A pole 35 includes an outer thread 38 threaded with the inner thread 33 of the cap 32 and secured to the piston 36 for moving the piston 36 along the casing 31 by rotating the pole 35 relative to the casing 31.

In operation, the pump 30 may pump the air into or may draw the air out of the chamber 12 of the housing 10 (FIG. 1), such that the air received in the chamber 12 of the housing 10 and the air envelopes 13, 14 may be used for cushioning purposes. The air envelopes 13, 14 may also be used for cushioning purposes when the valve 80 is removed from the port 15 of the housing 10.

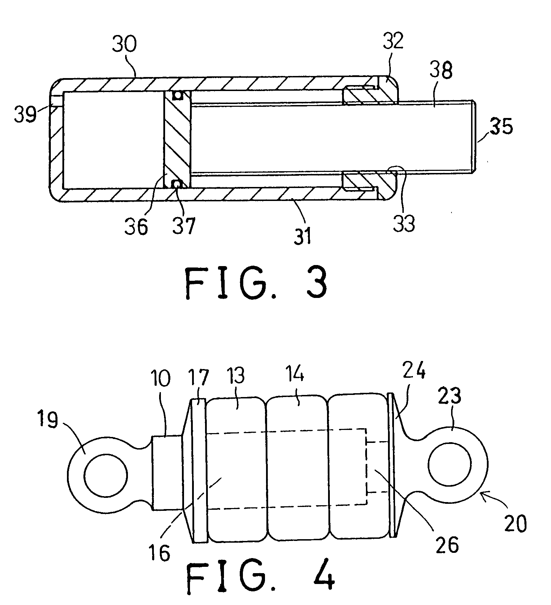

As shown in FIG. 4, the first member 10 may include a post 16 extended from the end wall 17. The air envelopes 13, 14 are engaged on and around the post 16. The second member 20 includes a panel 24 having a shaft 26 slidably engaged in the post 16 of the first member 10 for guiding the members 10, 20 to slide relative to each other. The air envelopes 13, 14 are engaged between the end wall 17 and the panel 24 of the members 10, 20 for cushioning purposes.

## Claims

1. A shock absorber comprising a first member (10) and a second member (20) movable relative to each other, **characterized in that**:
at least one air envelope (13, 14) is disposed between the first member (10) and the second member (20) for cushioning purposes.

2. A shock absorber according to claim 1, wherein the first member (10) is a housing (10) having a chamber (12), the second member (20) includes a tube (22) slidably engaged in the housing (10) and engaged with the air envelope (13, 14).

3. A shock absorber according to claim 2, wherein the second member (20) includes a piston (21) secured to the tube (22) and slidably engaged in the housing (10) and engaged with the air envelope (13, 14).

4. A shock absorber according to claim 2, wherein the first member (10) includes a first end having a cover (11), the tube (22) is slidably engaged through the cover (11).

5. A shock absorber according to claim 2 further comprising means (30) for pumping the housing (10).

6. A shock absorber according to claim 5, wherein the pumping means (30) includes a port (15) formed in the housing (10), a casing (31) having an opening (39) coupled to the port (15) of the housing (10), a piston (36) slidably received in the casing (31), and means (35) for moving the piston (36) along the casing (31) to force an air into the housing (10).

7. A shock absorber according to claim 6, wherein the moving means (35) includes a pole (35) secured to the piston (36) for moving the piston (36) along the casing (31).

8. A shock absorber according to claim 7, wherein the moving means (35) includes a cap (32) secured to the casing (31) and having an inner thread (33), the pole (35) includes an outer thread (38) threaded with the inner thread (33) of the cap.
